# EUROPEAN PATENT SPECIFICATION

(11) **EP 4 092 278 B1**
(45) Date of publication and mention of the grant of the patent: **23.07.2025**
(21) Application number: 21465524.3
(22) Date of filing: 20.05.2021
(51) Int. Cl.: F16B 5/02, G02B 27/01

(54) **CAPTURED FASTENER ASSEMBLY**
FESTGEHALTENE BEFESTIGUNGSANORDNUNG
ENSEMBLE DE FIXATION CAPTURÉ

(43) Date of publication of application: 23.11.2022
(73) Proprietor: Continental Automotive Technologies GmbH, 30175 Hannover (DE)
(72) Inventor: Mihet, Sorin, 60488 Frankfurt am Main (DE)
(74) Representative: Continental Corporation

(56) References cited:
- EP-B1- 2 798 231
- DE-A1- 102010 011 686
- US-B2- 10 060 183

## Description

The invention is directed to a captured fastener assembly, especially for automotive applications. Captured fastener assemblies are used for pre-assembled components that are provided to another place, like another factory than the one where pre-assembly takes place, or to another station of a production line. A captured fastener of the pre-assembled component is ready for use at the other place thus not requiring such fastener to be held available, to be selected and processed. It is thus a preferred solution.

US 6,106,207 shows a captured fastener assembly adapted to be attached to an underlying structure, comprising a fixing stay with a passage, a fastener with a tip end, a threaded portion, and a head, said fastener being capable of being axially advanced from a retracted position, in which its threaded portion engages said fixing stay and said tip end is completely housed in said passage, to an advanced position, in which its threaded portion is disposed outside of said passage and threaded yearly engages the underlying structure. The fastener used here is provided with an elongated shank arranged between its head and its threaded portion in order to provide for radial play in the advanced position of the fastener. As this is not an off-the-shelf article, its use is costly.

DE 10 2010 011686 A1 shows a captured fastener assembly according to the preamble of claim 1. EP 2 798 231 B1 shows a similar captured fastener assembly.

In a captured fastener assembly according to the invention according to claim 1, the passage of the fixing stay has an inner diameter that is larger than the outer diameter of said threaded portion. This allows for radial play. The passage is further provided with an inner ridge being capable to engage with the threaded portion of the fastener and to break when exposed with a force and/or a torque exceeding a threshold. This allows for the fastener being held captured in the fixing stay when in the pre-assembled state. For final assembly to the underlying structure one of a force, a torque and a force and a torque is applied to the fastener. This leads to breaking of the ridge which sets the fastener free from its captured state. The force preferably is a force in axial direction of the fastener. The torque preferably is a torque in fastening rotational direction of the threaded portion. The torque preferably is applied in an asynchronous way with regard to the axial force. Such asynchronism occurs for example when the force corresponds to a movement of the fastener of twice the pitch of the threaded portion while the torque corresponds to once this pitch. Due to the asynchronism the ridge is made to break. An advantage is that an off-the-shelf article, e.g. a screw, can be applied as the fastener, thus reducing cost by using a priceworthy off-the-shelf product as well as by reducing logistics efforts by reducing the number of different / special products to be stocked.

Preferably the inner ridge of the passage is made of plastic material. Such material is cheap. It easily breaks and does not impact the fastener if the fastener is made of a stronger material, preferably made of metal. Especially the threaded portion is thus kept unaffected by the breaking of the ridge. As the ridge does not need to have a precise structure, e.g. it does not need to be threaded so as to fit to the threaded portion, it can be produced in a cheap production step that does not require high precision, at least regarding the ridge.

According to the invention said inner ridge is made of material that breaks in small particles when exposed with said force and/or torque. For example it crumbles into small granular chunks of similar size and shape, similar to broken safety glass. This has the advantage that small particles reduce the risk of causing blocking of the fastener when the fastener moves from its retracted position to its advanced position. Also radial movement of the fastener is less prone to being blocked in case of the ridge breaking in small particles.

Preferably the fastener is provided with a washer that covers the passage in the advanced position of the fastener. The washer's radial extension is therefor larger than the radial extension of the passage. The advantage of using a washer is that the broken ridge particles are caged by the washer in the space between fastener and passage and thus are prevented from interfering with other objects. Instead of a washer also another element may be used that covers the space between fastener and passage when the fastener is in its advanced position.

Preferably said inner ridge has an axial extension in the range of the pitch of said threaded portion. This allows for easy screw in of the fastener into its captured state. Advantageously the axial extension does not fit exactly the pitch so as to capture the fastener. Especially, said axial extension is about 1.2 to 1.5 times the extension of said pitch. This keeps the fastener free of play without requiring too much force or torque when mounting the fastener at the ridge.

The threaded portion, in said advanced position of the fastener, is partly disposed outside of said passage and partly inside said passage. An off-the-shelf article may thus be used as fastener, e.g. a metric screw not being provided with a shank free of threads.

A head up display component according to the invention is provided with a captured fastener assembly as described above. Preferably, the component has a mounting orientation in which the passage is essentially vertical. This has the advantage that the small particles that will fall downwards after having been broken off from the ridge automatically move into the space between fastener and passage, thus not contaminating the outside of said space.

Further features of the present invention will become apparent from the following description and the appended claims in conjunction with the figures.

### Figures

- Fig.1: Captured fastener assembly of a head up display component
- Fig.2: Captured fastener assembly
- Fig.3: Fixing stay of a captured fastener assembly
- Fig.4: Fixing stay with fastener
- Fig.5: Captured fastener assembly with fastener in retracted position
- Fig.6: Captured fastener assembly with fastener in advanced position
- Fig.7: Captured fastener assembly with fastener in retracted position
- Fig.8: Enlarged detail of the fastener of Fig.7
- Fig.9: Passage with ridge

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

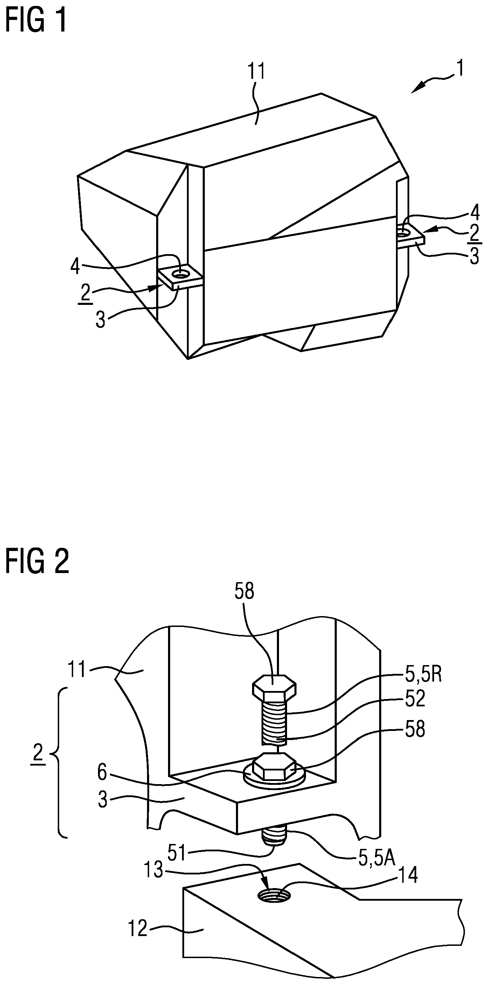

Fig.1 shows a captured fastener assembly of a head up display component 1 in perspective view. The housing 11 of the component 1 is provided with three captured fastener assemblies 2, two of which are visible in this view, the other one is arranged on the backside of the housing 11 and is thus not visible here. A fixing stay 3 provided with a passage 4, which both are part of the assembly 2, are shown.

Fig.2 shows a detail of the captured fastener assembly 2 in enlarged view. The fixing stay 3 is an integral part of the housing 11. A partial view of a fastener 5 is shown in a retracted position 5R as well as in an advanced position 5A. The fastener 5 is provided with a tip end 51 that is visible in the advanced position 5A. The fastener 5 is further provided with a threaded portion 52 that is visible in the retracted position 5R. A head 58 of the fastener 5 is visible in both positions 5A,5R. In the advanced position 5A of the fastener 5 a washer 6 is shown. The washer 6 is pressed against the fixing stay 3 by the head 58 of the fastener 5. The washer 6 thus covers the passage 4 which is thus not visible here. A part of the underlying structure 12 is visible below the fixing stay 3. Both are not yet connected to each other and shown distant from each other. The underlying structure 12 is provided with a bore 13 having an internal screw thread 14. For affixing the housing 11 to the underlying structure 12 the fixing stay 3 with the fastener 5 in its retracted position 5R is moved close to the underlying structure thus, that the passage 4 and the bore 13 are aligned or nearly aligned. The fastener 5 is then advanced downwardly so that its tip end 51 enters the bore 13. The fastener's 5 radial position is aligned to the position of the bore 13 by the tapered form of the tip end 51. Then the threaded portion 52 engages with the internal screw thread 14. The fastener 5 is screwed in until it reaches its advanced position 5R.

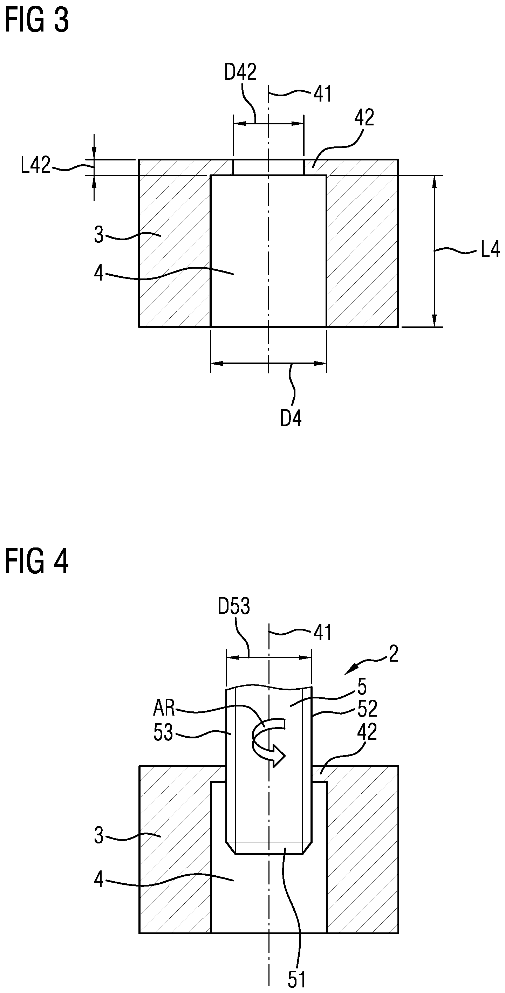

Fig.3 shows a sectional view of a fixing stay 3 of a captured fastener assembly 2 according to the invention. The passage 4 extends along an axis 41. At the upper end of the passage 4 it is provided with an inner ridge 42. The inner diameter D4 of the passage 4 is larger than the inner diameter D42 of the ridge 42. The axial extension L4 of the passage 4 is much larger than the axial extension L42 of the ridge 42. The ridge 42 is made of plastics material. In the example shown, it is the same material of which the fixing stay 3 is made. Neither the passage 4 as shown nor the ridge 42 are provided with an internal screw thread. When producing the captured fastener assembly, the ridge 42 preferably is used as parting line where two parts of an injection moulding tool meet each other. After having removed the tools, there is no need for smoothening or deburring, as the ridge will anyway get into contact with the fastener's 5 threaded portion and finally be broken into small particles.

Fig.4 shows a sectional view of the fixing stay 3 with a fastener 5. Only the lower parts of the fastener 51 are shown: The tip end 51 and the lower part of the threaded portion 52. In the example shown the fastener 5 is a metric fillet screw with an external screw thread 53. The outer diameter D53 of the external screw thread 53 is smaller than the inner diameter D4 of the passage 4, but the outer diameter D53 is at least slightly larger than the inner diameter D42 of the ridge 42. The fastener 5 can thus easily be inserted into the ridge 42 by use of small force or small torque. Screwing-in is indicated by rotation arrow AR. The threaded portion 53 slightly deforms the ridge 42 and thus reaches a stable position in which it is captured. The captured fastener assembly 2 is thus pre-mounted. It can be transported to another place where it is to be assembled to an underlying structure 12 without risk of the fastener 5 getting lost due to disturbances that usually occur during transport.

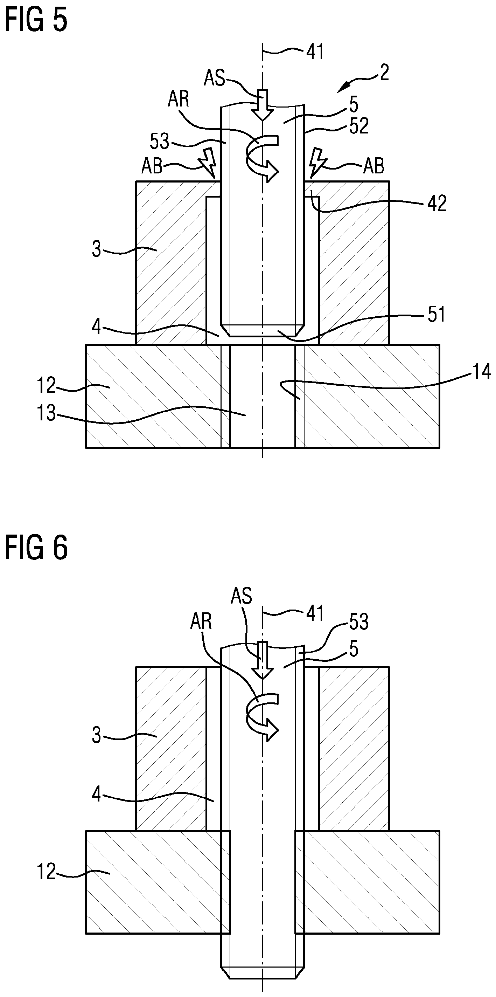

Fig.5 shows the captured fastener assembly 2 with the fastener 5 in its retracted position 5R. The fixing stay 3 is shown in contact with the underlying structure 12 but still with the fastener 5 captured. This is the situation at start of assembly, in case of a head up display component 1 it is its assembly into a vehicle. The exact position of the assembly 2 relative to the underlying structure 12 is reached by positioning means not shown here. A force in axial direction as indicated by straight arrow AS and a torque as indicated by rotation arrow AR are applied to the fastener 5. In alternative embodiments only a force in axial direction or only a torque might be applied at the beginning of the assembly process. Axial force and/or torque are chosen with such strength that their application breaks off small particles from the ridge 42. This is indicated by arrows AB. After the ridge 42 is broken off the external screw thread 53 of the fastener 5 is no longer captured. The fastener moves downward through the passage 4. This happens due to at least one of gravitation, axial force applied as indicated by arrow AS, and axial force resulting from torque as indicated by arrow AR in reaction with ridge 42. When the tapered tip end 51 reaches the bore 13 it centres the fastener 5 with respect to the bore 13. This is possible due to the inner diameter D4 of the passage 4 being larger than the outer diameter D53 of the external screw thread 53 of the fastener 5. Fastening the assembly 2 to the underlying structure 12 does thus not influence their relative position in horizontal direction, which is defined by positioning means not shown here, as already mentioned above. In other words: At start of assembly in a car a force in axial direction and/or a torque applied to the fastener 5 will break the ridge 42. The fastener 5 is then loose in the passage 5 in order to not define the centring. The centring is given by positioning means not shown here. The head 58 of the fastener 5 has the freedom to find the fillet, the internal screw thread 14, in the underlying structure 12. Usually the underlying structure 12 is made of metal. Alterative solutions use plastics material having sufficient strength, plastics material with the internal screw thread 14 being sufficiently strengthened or being made of metal embedded into plastics.

Fig.6 shows the captured fastener assembly with the fastener 5 in an advanced position 5A. The fastener's position as shown here, this is not yet the maximum advanced position. After small particles of the ridge 42 are broken off as described to the previous drawing the small particles fall inside the gap between fastener 5 and inner wall of passage 4. In a preferred embodiment this gap has a radial extension of about 0,5mm at each side, if centred. The small particles are sufficiently smaller in order not to block movement of the fastener 5 in an inacceptable way. In this way the fastener 5 is assembled and centred only by the position defined by the bore 13 of the underlying structure 12. This ensures perfect contact between head up display component 1 (or any other component the assembly 2 is part of) and underlying structure 12 as part of a vehicle the head up display component is to be assembled to. With small particles of the ridge 42 broken off, the fastener 5 has sufficient room for movement to compensate position tolerances. It can be seen that the external screw thread 53, and thus the threaded portion 52, in this advanced position 5A of the fastener 5, is partly disposed inside the passage 4 and partly disposed outside the passage 4.

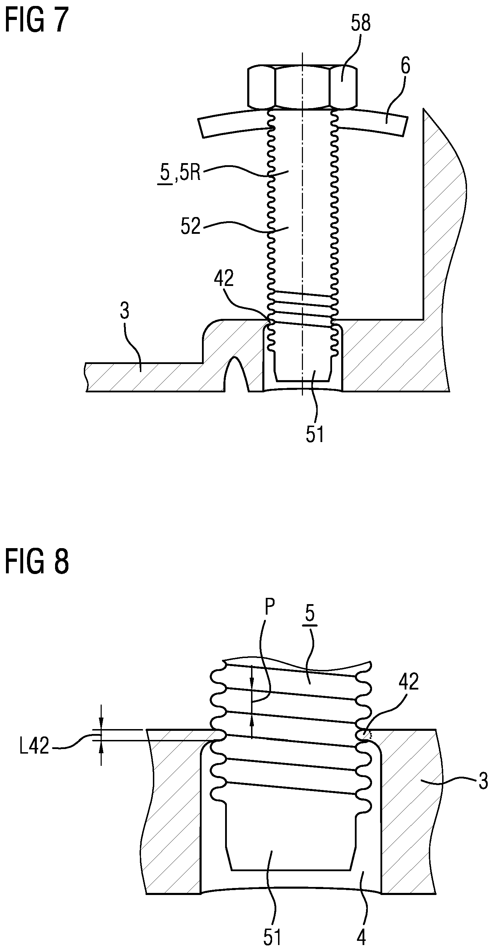

Fig.7 shows a detail of a captured fastener assembly 2 with the fastener 5 in its retracted position 5R. At its top end, just below its head 58 a washer 6 is held in position by the threaded portion 52. The threads are only depicted partially in the lower part of the fastener 5, shortly above the tip end 51 in the range where the fastener 5 engages with the ridge 42 of the fixing stay 3.

Fig.8 shows an enlarged detail of the fastener 5 of Fig.7 above. Single threads are shown in the area of the ridge 42. The pitch P of a single thread is in a similar range as the axial extension L42 of the ridge 42. At the right side of the fastener 5 the thread and the ridge 42 overlap as indicated by dots. In reality, the thread deforms the ridge 42, which is not shown here for simplicity.

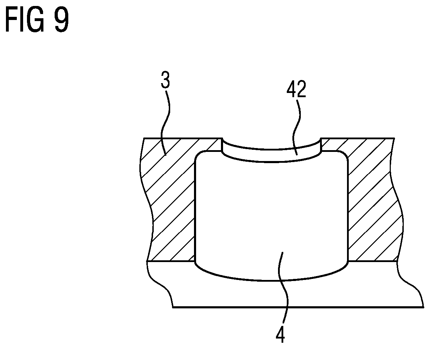

Fig.9 shows a cut view of the fixing stay 3 with passage 4 with ridge 42 but free of a fastener 5. In this embodiment the ridge 42 is a circumferential protrusion. In other embodiments not shown here the ridge 42 may well consist of several separate protrusions that each only cover a section. The specific geometry is designed so as to keep in place the fastener 5 in an unmounted position until delivery. After delivery the fastener 5 is moved into a mounted position.

Preinstalled fastening screws arranged in a breakthrough region made of plastics material are shown in US 2014/033478 A1. The present invention is different in the sense that the known captive screws have metric fillet and they are not self-tapping. Thus, they would not be able to be fixed with presented method. According to the present invention the screw does not fillet in both components at same time. Further, the screws do not determine the position of the assembly. They are not a centring feature according to the present invention. Thus, the fastener 5, the screw has freedom of movement in order to find the bore 13.

Preinstalled fastening screws that are preinstalled into a sheet of metal are shown in US 5,570,982. The present invention is different in the sense that the known captive screws have metric fillet and they are not self-tapping. Thus, they would not be able to be fixed with presented method. According to the present invention the screw does not fillet in both components at same time. Further, the screws do not determine the position of the assembly. They are not a centring feature according to the present invention. Thus, the fastener 5, the screw has freedom of movement in order to find the bore 13. Further, no fillet needs to be made in delivery part. The ridge 42 made of plastics material fits on the existing fillet of the external screw thread 53 of the fastener 5.

The invention proposes adding a special geometry, the ridge 42, in the screw dome, the top of passage 4. The ridge 42 is meant to act as a fillet in order for the screw thread of the fastener 5 to be assembled on it, independent of the screw thread type or the fastener type. When the screw process is ready to be performed - after shipment - the ridge 42 will break in controlled areas and the fastener will become free. In this way, the correct position - unassembled - is guaranteed until delivery.

## Claims

1. Captured fastener assembly (2) adapted to be attached to an underlying structure (12), comprising
a fixing stay (3) with a passage (4),
a fastener (5) with a tip end (51), a threaded portion (52), and a head (58),
said fastener (5) being capable of being axially advanced from a retracted position (5R), in which its threaded portion (52) engages said fixing stay (3) and said tip end (51) is completely housed in said passage (4), to an advanced position (5A), in which its threaded portion (52) is disposed outside of said passage (4) and threadedly engages the underlying structure (12), wherein
said passage (4) has an inner diameter (D4) that is larger than an outer diameter (D53) of said threaded portion (52), and has an inner ridge (42) being capable to engage with the threaded portion (52) and to break when exposed with a force and/or torque exceeding a threshold, and wherein said inner ridge (42) has a geometric shape that is different from the geometric shape of said threaded portion (52), **characterized in that** said inner ridge (42) is made of material that breaks in small particles when exposed with said force and/or torque exceeding said threshold.

2. Assembly according to claim 1 wherein said inner ridge (42) is made of plastics material.

3. Assembly according to one of the preceding claims, wherein the fastener (5) is provided with a washer (6) that covers the passage (4) in the advanced position (5A) of the fastener (5).

4. Assembly according to one of the preceding claims, wherein said inner ridge (42) has an axial extension (L42) in the range of the pitch (P) of said threaded portion (52).

5. Assembly according to one of the preceding claims, wherein, in said advanced position (5A), the threaded portion (52) is partly disposed outside of said passage (4) and partly inside said passage (4).

6. Head up display component provided with a captured fastener assembly (2) according to one of the preceding claims.

## Patentansprüche

1. Zurückgehaltene Befestigungsanordnung (2), die dazu ausgelegt ist, an einer darunterliegenden Struktur (12) befestigt zu werden, die Folgendes aufweist eine Fixierungsverankerung (3) mit einem Durchgang (4),
ein Befestigungselement (5) mit einem Spitzenende (51), einem Gewindeabschnitt (52) und einem Kopf (58),
wobei das Befestigungselement (5) axial von einer zurückgezogenen Position (5R), in der sein Gewindeabschnitt (52) die Fixierungsverankerung (3) in Eingriff nimmt und das Spitzenende (51) vollständig in dem Durchgang (4) aufgenommen ist, zu einer vorgeschobenen Position (5A) vorgeschoben werden kann, in der sein Gewindeabschnitt (52) außerhalb des Durchgangs (4) angeordnet ist und die darunterliegende Struktur (12) in Gewindeeingriff nimmt, wobei
der Durchgang (4) einen Innendurchmesser (D4) aufweist, der größer als ein Außendurchmesser (D53) des Gewindeabschnitts (52) ist, und einen inneren Grat (42) aufweist, der mit dem Gewindeabschnitt (52) in Eingriff kommen und brechen kann, wenn er einer Kraft und/oder einem Drehmoment ausgesetzt wird, die oder das einen Schwellenwert überschreitet, und wobei der innere Grat (42) eine geometrische Form aufweist, die sich von der geometrischen Form des Gewindeabschnitts (52) unterscheidet, **dadurch gekennzeichnet, dass** der innere Grat (42) aus einem Material hergestellt ist, das in kleine Teilchen zerbricht, wenn es der Kraft und/oder dem Drehmoment ausgesetzt wird, die oder das den Schwellenwert überschreitet.

2. Anordnung nach Anspruch 1, wobei der innere Grat (42) aus Kunststoff besteht.

3. Anordnung nach einem der vorhergehenden Ansprüche, wobei das Befestigungselement (5) mit einer Unterlegscheibe (6) versehen ist, die in der vorgeschobenen Position (5A) des Befestigungselements (5) den Durchgang (4) abdeckt.

4. Anordnung nach einem der vorhergehenden Ansprüche, wobei der innere Grat (42) eine axiale Verlängerung (L42) im Bereich der Steigung (P) des Gewindeabschnitts (52) aufweist.

5. Anordnung nach einem der vorhergehenden Ansprüche, wobei in der vorgeschobenen Position (5A) der Gewindeabschnitt (52) teilweise außerhalb des Durchgangs (4) und teilweise innerhalb des Durchgangs (4) angeordnet ist.

6. Head-up-Anzeigevorrichtungskomponente, die mit einer zurückgehaltenen Befestigungsanordnung (2) nach einem der vorhergehenden Ansprüche versehen ist.

## Revendications

1. Ensemble de fixation capturé (2) conçu pour être fixé à une structure sous-jacente (12), comprenant
une entretoise de fixation (3) dotée d'un passage (4),
un élément de fixation (5) doté d'une extrémité de pointe (51), d'une partie filetée (52) et d'une tête (58),
ledit élément de fixation (5) pouvant être avancé axialement d'une position rétractée (5R), dans laquelle sa partie filetée (52) vient en prise avec ladite entretoise de fixation (3) et ladite extrémité de pointe (51) est complètement logée dans ledit passage (4), à une position avancée (5A), dans laquelle sa partie filetée (52) est disposée à l'extérieur dudit passage (4) et vient en prise de manière filetée avec la structure sous-jacente (12),
ledit passage (4) ayant un diamètre intérieur (D4) qui est plus grand qu'un diamètre extérieur (D53) de ladite partie filetée (52), et ayant une nervure intérieure (42) qui peut venir en prise avec la partie filetée (52) et se rompre lorsqu'elle est exposée à une force et/ou un couple dépassant un seuil, et ladite nervure intérieure (42) ayant une forme géométrique qui est différente de la forme géométrique de ladite partie filetée (52), **caractérisé en ce que** ladite nervure intérieure (42) est en un matériau qui se brise en petites particules lorsqu'il est exposé à ladite force et/ou audit couple dépassant ledit seuil.

2. Ensemble selon la revendication 1, ladite nervure intérieure (42) étant en matière plastique.

3. Ensemble selon l'une des revendications précédentes, l'élément de fixation (5) étant muni d'une rondelle (6) qui recouvre le passage (4) dans la position avancée (5A) de l'élément de fixation (5).

4. Ensemble selon l'une des revendications précédentes, ladite nervure intérieure (42) ayant une extension axiale (L42) dans la plage du pas (P) de ladite partie filetée (52).

5. Ensemble selon l'une des revendications précédentes, dans ladite position avancée (5A), la partie filetée (52) étant disposée en partie à l'extérieur dudit passage (4) et en partie à l'intérieur dudit passage (4).

6. Composant d'affichage tête haute muni d'un ensemble de fixation capturé (2) selon l'une des revendications précédentes.
